# EUROPÄISCHE PATENTSCHRIFT

(11) **EP 1 712 283 B1**
(45) Veröffentlichungstag und Bekanntmachung des Hinweises auf die Patenterteilung: **29.07.2009**
(21) Anmeldenummer: 06006348.4
(22) Anmeldetag: 28.03.2006
(51) Int. Cl.: B01L 3/00, B01L 7/00, B01J 19/00, G01N 1/34

(54) **Vorrichtung , System mit einer solchen Vorrichtung und Verfahren zum Trocknen von Kavitäten in Mikrotiterfilterplatten und von darin angeordneten Filtern**
Device, apparatus comprising said device and a method for drying wells and filters of micro-titer filter plates
Dispositif, appareil comprenant ce dispositif et procédé pour sécher les cavités et les éléments filtrants de plaques de micro-titration en comprenant.

(30) Priorität: 11.04.2005 DE 102005016755
(43) Veröffentlichungstag der Anmeldung: 18.10.2006
(73) Patentinhaber: EPPENDORF AG, 22339 Hamburg (DE)
(72) Erfinder: Harnack, Kurt, 22889 Tangstedt (DE); Scheffler, Peter, 22399 Hamburg (DE)
(74) Vertreter: Hausfeld, Norbert

(56) Entgegenhaltungen:
- US-A- 5 380 437
- US-B1- 6 274 091
- US-B1- 6 592 826

## Beschreibung

Die vorliegende Erfindung bezieht sich auf eine Vorrichtung zum Trocknen von Kavitäten in Mikrotiterfilterplatten und von darin angeordneten Filtern nach dem Oberbegriff des Anspruchs 1, auf ein System nach Anspruch 8 mit einer solchen Vorrichtung, sowie auf ein Verfahren zum Trocknen von Kavitäten in Mikrotiterfilterplatten und von darin angeordneten Filtern nach dem Oberbegriff des Anspruchs 9.

Vorrichtungen, Systeme und Verfahren dieser Art werden insbesondere bei der Aufarbeitung von flüssigem, zumeist in Puffer aufgenommenen Probematerial in Mikrotiterfilterplatten verwendet.

Übliche Mikrotiterfilterplatten weisen z.B. 96 Kavitäten auf mit einer oberen und einer unteren Öffnung, wobei im Bereich der unteren Öffnung ein querschnittsabdeckender Filter angeordnet ist.

Die Proben werden in die einzelnen Kavitäten der Mikrotiterfilterplatte pipettiert und dann über Vakuumfiltration durch die Filter gesaugt und dabei aufgetrennt. Interessieren die im Filter absorbierten Komponenten, so wird in aller Regel nach der Probenfiltration mehrfach Waschlösung in die Kavitäten gegeben und durch die Filter gesogen. Daran anschließend wird ein Elutionspuffer eingesetzt, um die interessierenden Komponenten des flüssigen Probenmaterials aus dem Filter herauszulösen. Bei üblichen Aufarbeitungen werden also nacheinander unterschiedliche Flüssigkeiten durch die in den Kavitäten der Mikrotiterfilterplatte angeordneten Filter bewegt. Eine solche Vorrichtung in automatisierter Form zeigt die US 5,380,437.

Ein Problem ergibt sich insbesondere bei Verwendung von Puffer- oder Waschlösungen, in denen Alkohol oder sonstige mit Wasser mischbare organische Lösungsmittel (Isopropanol) enthalten ist, da sich die Lösungsmittel in den Kapillaren der Filter festsetzen und nachfolgende Reaktionen stören können. Weiterhin verbleiben Reste der verwendeten Lösungsmittel als Tropfen auf den Seitenwänden der Kavitäten, insbesondere ausgangsseitig unterhalb der Filter.

Aus den Filtern der Mikrotiterfilterplatte sollte daher zwischen den Filtrationsschritten, insbesondere bei Verwendung von alkoholhaltigen Puffern oder Waschlösungen, jeweils die Restflüssigkeit entfernt werden. Dies gilt ebenso für die genannten Tropfen auf den Kavitätenwänden. Es wird hierzu üblicherweise ein Trocknungsprozeß angewendet.

Es sind mehrere Verfahren zum Trocknen Kavitäten und der Filter einer Mikrotiterfilterplatte bekannt. Die einfachste, aber aus Zeitgründen nicht umsetzbare Möglichkeit ist, die Mikrotiterfilterplatte über einen längeren Zeitraum stehen zu lassen, um die Restflüssigkeit, insbesondere den leichtflüchtigen Alkohol, in die Umgebungsluft verdunsten zu lassen.

Denkbar wäre mittels Erwärmung der Mikrotiterfilterplatte den Verdunstungsvorgang zu beschleunigen. Eine solche Konstruktion ist z.B. in der US 2004/0033619 A1 und der EP 1257363 B1 dargestellt. Es hat sich allerdings gezeigt, daß relativ hohe Temperaturen erforderlich sind, um gute Trocknungsergebnisse der Kavitäten und der Filter zu erreichen. Die hohen Temperaturen können ggf. zu Schäden an der Mikrotiterfilterplatte bzw. auch der Proben führen.

Es ist auch bekannt, die Kavitäten und die Filter mit Saugpapier abzutupfen. Das Abtupfen kann zwar automatisiert erfolgen und ist für die auf den Kavitätenwänden verbliebenen Tropfen durchaus effektiv, es entfernt aber nur die auf oder in der Nähe der Filteroberfläche vorhandene Restflüssigkeit. Tieferliegende Restflüssigkeit kann nicht entfernt werden.

Denkbar ist weiterhin, in den Kavitäten und den Filtern enthaltene Restflüssigkeit durch Zentrifugation zu entfernen. Nachteilig ist, daß hierfür die Mikrotiterfilterplatte aus der Vakuumkammer genommen und in eine Zentrifuge gesetzt werden muß. Dies bedeutet einen zusätzlichen Arbeitsschritt, der besonders im Hinblick auf eine Automatisierung des Verfahrens nicht gewünscht wird.

Weiterhin ist aus der DE 101 44 224 C1 bekannt, die Filter durch die obere Öffnung der Kavitäten hindurch mit einem Luftstrom zu beaufschlagen. Nachteilig ist allerdings, daß das Verfahren relativ zeitaufwendig ist.

Aufgabe der Erfindung ist, eine Vorrichtung und ein Verfahren zum Trocknen von Kavitäten in Mikrotiterfilterplatten und von darin angeordneten Filtern zu schaffen, die einfach, effektiv und ohne großen Zeitaufwand anwendbar sind. Insbesondere soll eine Vorrichtung geschaffen werden, die sich automatisiert in übliche Kammern zur Vakuumfiltration auf einfache Weise integrieren läßt. Gelöst wird die Aufgabe mit einer Vorrichtung, die die kennzeichnenden Merkmale des Anspruches 1 aufweist, durch ein System mit den Merkmalen des Anspruchs 8, sowie durch ein Verfahren mit den kennzeichnenden Merkmalen des Anspruches 9.

Vorteilhafte Ausgestaltungen der Erfindung sind in den Unteransprüchen angegeben.

Die erfindungsgemäße Vorrichtung trocknet die Kavitäten einer Mikrotiterfilterplatte und die darin angeordneten Filter mittels eines erwärmten Gasstromes und zeichnet sich durch einen Wärmetauscher aus, der auf der Mikrotiterfilterplatte anordenbar und wieder entfernbar ist. Der Wärmetauscher kann dabei sowohl auf der Mikrotiterplatte aufgelegt sein, als auch in Abstand oberhalb der Mikrotiterfilterplatte durch eine geeignete Halteeinrichtung gehalten sein. Der Wärmetauscher ist aufheizbar, hat wenigstens eine Eintritts- und eine Austrittsöffnung für einen Gasstrom, erwärmt das durchströmende Gas und leitet es auf die oberen Öffnungen der Kavitäten. Der Gasstrom wird dabei erzeugt von einer Vakuumpumpe, die mit einer zur Vakuumfiltration ausgebildeten Kammer in Verbindung steht, auf der die Mikrotiterfilterplatte angeordnet ist. Auf diese Weise überstreicht ein erwärmtes Gas, z.B. Luft, die Wände der Kavitäten und gelangt auf die zu trocknenden Filter, bzw. wird von der Vakuumpumpe durch die zu trocknenden Filter gesaugt.

Die erfindungsgemäße Vorrichtung ist entfernbar ausgebildet, um z.B. nach dem Trocknen durchzuführende weitere Vorgänge nicht zu behindern, z.B. das Einfüllen neuer Probeflüssigkeiten in die Kavitäten. Um den Wärmetauscher automatisiert verwenden zu können, z.B. in einem bekannten Laborautomaten, ist der Wärmetauscher durch eine zugeordnete Transporteinrichtung transportierbar ausgebildet. Laborautomaten weisen in der Regel Transporteinrichtung auf, z.B. um Mikrotiterfilterplatten verfahren zu können. Diese Transporteinrichtungen können auch zum Transport des Wärmetauscher verwendet werden. Insbesondere wenn der Wärmetauscher in Länge und Breite einer üblichen Mikrotiterfilterplatte entspricht, muß für die Steuerung der Transporteinrichtung dann ggf. nur mit einer geänderten Höhenkoordinate gegenüber dem Transport einer Mikrotiterfilterplatte gearbeitet werden. Die Vorrichtung kann aber auch mit einer eigenen Transporteinrichtung arbeiten.

Das Aufheizen des Wärmetauschers erfolgt nach Anspruch 1 in einer Aufheizposition, in die der Wärmetauscher von der Transporteinrichtung verfahrbar ist. Insbesondere ist der Wärmetauscher nach Anspruch 1 mit Vorteil passiv beheizt, indem er in der Aufheizposition auf eine Temperiereinheit abgesetzt wird. Für das passive Aufheizen kann z.B. eine in gängigen Laborautomaten in der Regel ohnehin vorhandene Temperiereinheit verwendet werden. Der Vorteil besteht darin, daß der Wärmetauscher aufgeheizt werden kann, bevor er zum Erwärmen des Gasstromes benötigt wird. Eine Aufheizzeit nach Anordnung auf der Mikrotiterfilterplatte entfällt. Der Vorteil passiven Aufheizens besteht in der einfachen Ausgestaltung des Wärmetauschers als einfachen, z.B. plattenförmigen Körper.

Mit der erfindungsgemäßen Vorrichtung lassen sich die Kavitäten und die Filter in besonders einfacher und effektiver Weise trocknen.

Der Wärmetauscher kann im Grundsatz beliebig geformt und dimensioniert sein. Allerdings werden vorteilhaft die Merkmale des Anspruch 2 vorgesehen, um die Handhabbarkeit und Automatisierbarkeit zu verbessern. Wenn der Wärmetauscher z.B. eine für Mikrotiterfilterplatten übliche Länge und Breite hat, kann er z.B. auf die Mikrotiterplatten aufgelegt werden. Er kann gegebenenfalls auch mit Halteeinrichtungen oder Transporteinrichtungen verwendet werden, die auch für das Handling von Mikrotiterfilterplatten verwendet werden.

Mit den zusätzlichen Merkmalen des Anspruch 3 wird vorteilhaft zum einen erreicht, daß keine zusätzlichen Haltemittel für den Wärmetauscher notwendig sind. Aufgrund der thermischen Isolierung kann der aufgeheizte Wärmetauscher auf der Mikrotiterfilterplatte aufliegen, z.B. mit einem Luftspalt dazwischen, ohne daß letztere Schaden nimmt. Zum anderen kann durch die Abdichtung vorteilhaft das Ansaugen von unerwärmter Nebenluft verhindert werden, die die Trocknung verschlechtern würde. Der auf die Filter gelangende Gasstrom durchströmt zuverlässig zuvor den Wärmetauscher und wird dabei erwärmt. Die Abdichtung muß dabei nicht vakuumdicht ausgeführt sein. Eine erhebliche Verminderung von Nebenluft ist bereits mit einfachen Dichtungen zu erreichen.

Es können z.B. auf der Mikrotiterfilterplatte geeignete Dicht- und Isoliermittel vorgesehen sein. Alternativ könnten die Mikrotiterfilterplatte und der Wärmetauscher in einen beide haltenden Träger angeordnet sein, der beide thermisch isoliert und abdichtend hält. Vorteilhaft sind aber die Merkmale des Anspruch 4 vorgesehen. Der Wärmetauscher ist danach auf seiner der Mikrotiterfilterplatte zugewandten Seite mit einer Dichtung ausgestattet, die radial außen liegend diese Seite umläuft und aus einem temperaturbeständigem Material besteht. Die Vorrichtung ist dadurch mit herkömmlichen Mikrotiterfilterplatten verwendbar, und es werden keine konstruktiv aufwändigen Träger benötigt. Vielmehr kann der so ausgebildete Wärmetauscher z.B. für die im Stand der Technik bekannten Laborautomaten z.B. als weiteres Zubehörteil verwendet werden.

Der Wärmetauscher kann z.B. aus einem offenporigen Material bestehen, z.B. aus einem gesinterten oder aufgeschäumten Metall. Mit Vorteil sind allerdings die Merkmale des Anspruchs 5 vorgesehen. Die als Düsen ausgebildeten Austrittsöffnungen, von denen jeder Kavität mindestens eine zugeordnet ist und die im Muster der Kavitäten angeordnet sind, ergeben eine gute Lenkung des erwärmten Gasstromes auf die Kavitäten und auf die Filter. Die Düsen können z.B. als Bohrungen in dem Wärmetauscher ausgebildet sein, die z.B. in weiterer Ausbildung offenporig mit feinen Metallteilchen gefüllt sein können. Der Begriff Düse, soweit in dieser Anmeldung verwendet, soll dabei jede Einrichtung abdekken, mit der sich eine gerichtete Luftströmung erzeugen läßt.

Mit Vorteil sind weiterhin die Merkmale des Anspruch 6 vorgesehen. Wenn jeder Kavität mehrere Düsen zugeordnet sind, vergrößert sich die wärmeabgebende, mit dem Gasstrom in Berührung kommende Oberfläche des Wäremtauschers, so daß pro Zeiteinheit mehr Wärmeenergie an das durchströmende Gas abgegeben werden kann. Die Trocknungszeit wird reduziert.

Mit den Merkmalen des Anspruch 7, wonach der Strömungswiderstand des Wärmetauschers mehrfach kleiner ist als der Strömungswiderstand der Filter, wird schließlich mit Vorteil erreicht, daß die von der den Gasstrom erzeugenden Vakuumpumpe aufzubringende Saugleistung überwiegend durch den Strömungswiderstand der Filter bestimmt ist. Eine Erhöhung der erforderlichen Saugleistung könnte unter ungünstigen Umständen z.B. zu einer Beschädigung der Mikrotiterfilterplatte führen. Überdies nimmt der Anteil an unerwünschter Nebenluft mit zunehmendem Strömungswiderstand des Wärmetauschers zu, so daß gegebenenfalls der Aufwand für die Abdichtung gegen Nebenluft erhöht werden müßte.

Das System nach Anspruch 8 weist zusätzlich zu der oben beschriebenen Vorrichtung weiterhin eine zur Vakuumfiltration ausgebildete Vakuumkammer und eine mit der Vakuumkammer in Verbindung stehende Vakuumpumpe auf. Dies können z.B. die in üblichen Laborautomaten vorhandenen Kammern und Pumpen sein, die für das erfindungsgemäße System nur um eine Vorrichtung nach einem der Ansprüche 1 bis 7 zu ergänzen wäre.

Zu den Vorteilen des erfindungsgemäßen Verfahrens nach Anspruch 9 und der Ausgestaltung nach Anspruch 10 kann ebenfalls auf die für die Vorrichtungsansprüche 1 bis 7 genannten Vorteile verwiesen werden.

Im folgenden soll die Erfindung an Hand der Figuren 1 bis 3 näher erläutert werden, die einige Ausführungsbeispiele darstellen. Es zeigen:
- Figur 1: eine Schnittdarstellung eines ersten Ausführungsbeispiels einer er- findungsgemäßen Vorrichtung in der Trocknungsanordnung,
- Figur 2: eine Schnittdarstellung eine zweiten Ausführungsbeispiels einer erfindungsgemäßen Vorrichtung, und
- Figur 3: eine perspektivische Ansicht eines schematisch dargestellten La- borautomaten mit einem Ausführungsbeispiel der Erfindung.

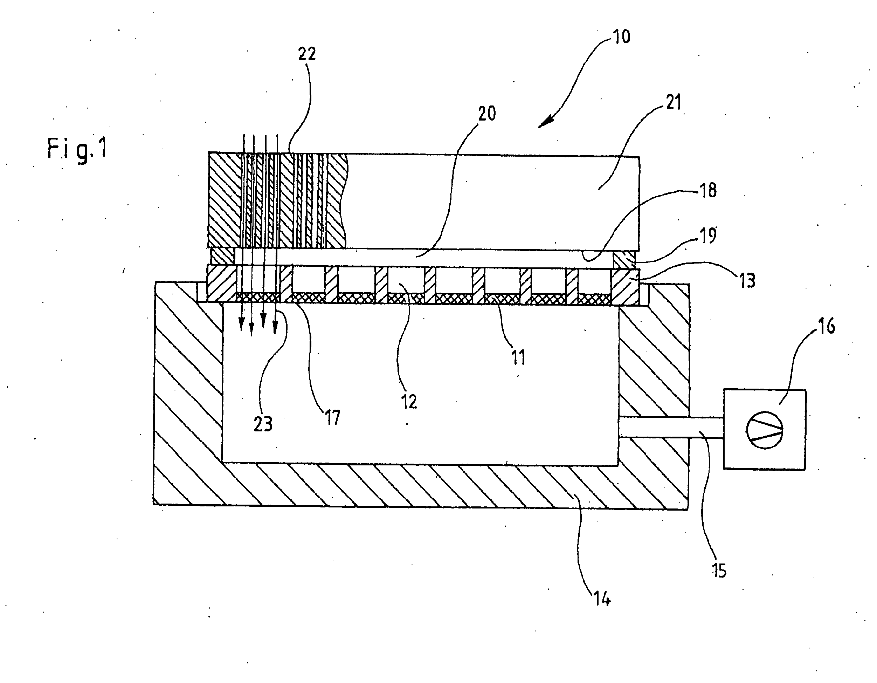

In Figur 1 ist im Schnitt und schematisch eine Vorrichtung 10 zum Trocknen von Kavitäten 12 und von Filtern 11, die in Kavitäten 12 einer Mikrotiterfilterplatte 13 angeordnet sind, dargestellt. Die Mikrotiterfilterplatte 13 liegt auf einer üblichen, zur Vakuumfiltration verwendeten Kammer 14 auf. Mit einer mit der Kammer 14 über eine Leitung 15 verbundenen Vakuumpumpe 16 kann an den unteren Öffnungen 17 der Kavitäten 12 ein Vakuum erzeugt werden.

Die Vorrichtung 10 ist für die Trocknung der Filter 11 und der Kavitäten 12 auf der Mikrotiterfilterplatte 13 aufgesetzt angeordnet. Die Vorrichtung 10 besteht dabei aus einem Wärmetauscher 21, der auf seiner Unterseite 18 mit einem Isolatorring 19 ausgestattet ist. Der Isolatorring 19 umläuft radial außen liegend die Unterseite 18 des Wärmetauschers 21 und ist aus einem temperaturbeständigen Material hergestellt, das den vom Wärmetauscher 21 erreichten Temperaturen standhalten kann. Durch den Isolatorring 19 sind der Wärmetauscher 21 und die Mikrotiterfilterplatte 13 thermisch getrennt und es verbleibt zwischen diesen ein luftgefüllter Raum 20.

Zusätzlich zu dieser Temperaturisolierung hat der Isolatorring 19 die Aufgabe, den Raum 20 zur Seite hin luftdicht abzuschließen, um das Ansaugen von kalter Nebenluft zu vermeiden.

Für den Trocknungsvorgang ist der Wärmetauscher 21 zuvor auf einer zugeordneten, in Figur 1 nicht gezeigten Heizeinrichtung erhitzt und in der gezeigten Weise auf der Mikrotiterfilterplatte 13 abgesetzt worden. Es wird dann die Vakuumpumpe 16 zur Erzeugung eines Vakuums angeschaltet. Es entsteht in der Kammer 14 und damit an den unteren Öffnungen 17 der Kavitäten 12 ein Vakuum. Durch die durchlässigen Filter 11 hindurch führt das Vakuum zu einem Absaugen der im Raum 20 enthaltenen Luft. Der sich ergebende Luftstrom führt durch die Kavitäten 12 der Mikrotiterfilterplatte 13 und durch die Filter 11 hindurch. Da der Raum 20 zwischen dem Wärmetauscher 21 und der Mikrotiterfilterplatte 13 zur Seite durch den Isolatorring 19 abgedichtet ist, wird Luft von oberhalb des Wärmetauscher 21 durch dessen Bohrungen 22 hindurch angesaugt, und beim Durchströmen des Wärmetauschers 21 erwärmt. Es entsteht im Ergebnis eine Luftströmung 23 durch den Wärmetauscher 21, den Raum 20 und die Kavitäten 12 hindurch, sodaß die Filter 11 und die Kavitäten 12 von erwärmter Luft durchströmt und getrocknet werden.

Nach Abschluß des Trockenvorganges kann die Pumpe 16 abgeschaltet und der Wärmetauscher 21 entfernt werden, z.B. um neue Probenflüssigkeit in die Kavitäten 12 einzufüllen.

Im gezeigten Beispiel ist der Wärmetauscher 21 als Platte ausgebildet, die eine gleiche Grundfläche aufweist, wie die Mikrotiterfilterplatte 13 . Durch die Platte 21 führen von der Ober- zur Unterseite 18 verlaufende Bohrungen 22 hindurch, die im Muster der in der Mikrotiterfilterplatte 13 ausgebildeten Kavitäten 12 angeordnet sind, wobei jeder Kavität 12 eine Gruppe von 4 x 4 Bohrungen 22 zugeordnet sind.

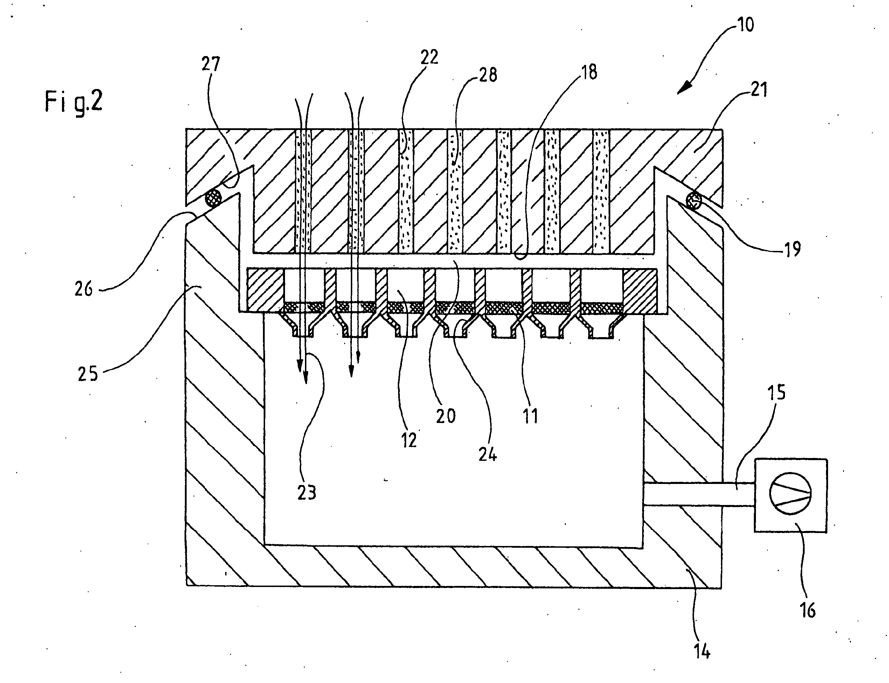

Bei dem in Figur 2 dargestellten Ausführungsbeispiel ist der Wärmetauscher 21 anders als in Figur 1 nicht auf der Mikrotiterfilterplatte 13 aufgelegt, sondern wird in einem geringen Höhenabstand oberhalb davon von die Mikrotiterfilterplatte 13 überragenden Seitenwänden 25 der Vakuumkammer 14 gehalten. Die sich gegenüberliegenden Stirnflächen 26, 27 der hochgezogenen Seitenwand 25 der Vakuumkammer 14 und des Wärmetauscher 21 sind dabei durch einen Dichtring 19 getrennt, der an dem Wärmetauscher 21 befestigt ist, und den zwischen Wärmetauscher 21, Mikrotiterfilterplatte 13 und der Seitenwand 25 der Vakuumkammer 14 eingeschlossenen Raum 20 gegen Nebenluft abdichtet. Auch eine thermische Isolierung erfolgt durch die Dichtung 19, damit die Seitenwand 25 der Kammer 14 dem Wärmetauscher 21 keine Wärmeenergie entzieht.

Auch in diesem Ausführungsbeispiel weist der Wärmetauscher 21 durchgehende, von der Ober- zur Unterseite 18 verlaufende Bohrungen 22 auf, die mit kleinen Metallteilchen 28 gefüllt sind, um die wärmeabgebende Kontakfläche mit dem die Bohrungen 22 durchströmenden Gas 23 zu vergrößern. Die Erzeugung des Gasstromes 23 erfolgt auch hier durch eine Vakuumpumpe 16 in der zu Figur 1 beschriebenen Weise.

Die Kavitäten 12 der Figur 2 verengen sich trichterförmig unterhalb der Filter 11. Insbesondere auf den Seitenwänden 24 des trichterförmigen Bereiches ausgangsseitig der Filter verbleiben Reste von Lösungsmitteln als Tropfen, die vor nachfolgenden Reaktionen entfernt werden sollten. Die durch die Filter 11 hindurchtretende und erwärmte Luft überstreicht die Wände 24 in diesem Bereich und führt zur Verdampfung der Tropfen., so daß nicht nur die Filter getrocknet werden, sondern auch die Wände der Kavitäten oberhalb und insbesondere unterhalb der Filter 11.

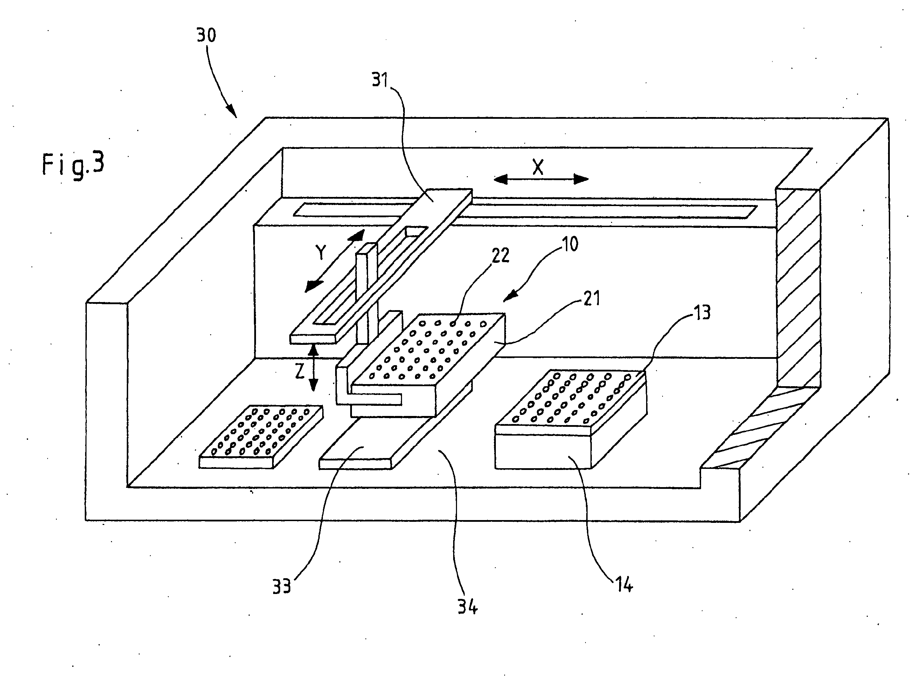

Figur 3 zeigt schließlich in prinzipienhafter Darstellung einen Laborautomaten 30. Der Automaten 30 ist mit einer Transporteinrichtung 31 ausgestattet, die einen in X-, Y- und Z-Richtung verfahrbaren Greifer 32 aufweist. Dieser Greifer 32 kann Mikrotiterfilterplatten und auch den Wärmetauscher ergreifen. In der gezeigten Momentaufnahme wird der zuvor auf der Heizplatte 33 erhitzte Wärmetauscher 21 zu der Mikrotiterplatte 13 verfahren, die auf einer Vakuumkammer 14 angeordnet ist, wie sie z.B. in Figur 1 gezeigt worden ist. Dort wir der Wärmetauscher 21 abgesetzt, und der Trocknungsprozeß kann beginnen. Nach Beendigung der Trocknung kann der Wärmetauscher 21 wieder entfernt und z.B. erneut auf die Heizplatte 33 abgelegt werden.

Zur Vorbereitung des Trocknungsprozesses wird der Wärmetauscher 21 zunächst für eine Aufheizzeit in der Aufheizposition 34 auf die Heizplatte 33 abgelegt. Diese Position kann z.B. auch die Ruheposition des Wärmetauschers 21 sein, und eine Steuerung des Automaten 30 kann z.B. die Heizplatte 33 anschalten, kurz bevor der Wärmetauscher 21 für den Trocknungsprozeß benötigt wird. Dann ergreift die Transporteinrichtung 31 mit seinem Greifer 32 den Wärmetauscher 21, verfährt ihn zur auf der Vakuumkammer 14 stehenden Mikrotiterfilterplatte 13 und setzt ihn von oben darauf ab. Es kann dann ein Gasstrom erzeugt werden wie zu den Figuren 1 und 2 beschrieben. Das von außen durch den Wärmetauscher 21 strömende Gas wird erwärmt und fließt durch die Kavitäten 12 der Mikrotiterfilterplatte 13 und durch die darin angeordneten Filter 11.

## Patentansprüche

1. Vorrichtung (10) zum Trocknen von Kavitäten (12) in Mikrotiterfilterplatten (13) und von darin angeordneten Filtern (11) mittels eines Gasstromes (23), wobei die Kavitäten (12) jeweils eine obere und eine untere Öffnung (17) aufweisen und die Mikrotiterfilterplatte (13) auf einer zur Vakuumfiltration von Mikrotiterfilterplatten (13) ausgebildeten Kammer (14) derart angeordnet ist, dass an den unteren Öffnungen (17) der Kavitäten (12), in denen die Filter (11) angeordnet sind, ein Vakuum anlegbar ist, **gekennzeichnet durch** einen auf der Mikrotiterfilterplatte (13) anordenbaren und wieder entfernbaren Wärmetauscher (21), der aufheizbar ausgebildet ist, wenigstens eine Eintritts- und wenigstens eine Austrittsöffnung (22) aufweist, zwischen denen ein Gasstrom (23) den Wärmetauscher (21) durchströmen kann, wobei der Wärmetauscher (21) den Gasstrom (23) erwärmend und auf die oberen Öffnungen der Kavitäten (12) leitend ausgebildet ist, und wobei eine mit der Vakuumkammer (14) in Verbindung stehende Vakuumpumpe (16) **durch** die Filter (11) hindurch den von der Eintritts- zur Austrittsöffnung (17) des Wärmetauschers (21) verlaufenden Gasstrom (23) erzeugt, wobei die Vorrichtung weiterhin eine dem Wärmetauscher (21) zugeordnete Transporteinrichtung (31, 32) und eine zugeordnete Temperiereinheit (33) aufweist, wobei mittels der Transporteinrichtung (31, 32) der transportierbar ausgebildete Wärmetauscher (21) in eine Aufheizposition (34) verfahrbar ist, und wobei der Wärmetauscher (21) weiterhin passiv beheizt ist, indem er von der Transporteinrichtung (31, 32) auf die zugeordnete Temperiereinheit (33) thermisch kontaktierend absetzbar ist.

2. Vorrichtung nach Anspruch 1, **dadurch gekennzeichnet, dass** der Wärmetauscher (21) plattenförmig ausgebildet ist, insbesondere mit einer üblichen Mikrotiterfilterplatten (13) entsprechenden Länge und Breite.

3. Vorrichtung nach Anspruch 1 oder 2, **dadurch gekennzeichnet, dass** der Wärmetauscher (21) auf die Mikrotiterfilterplatte (13) thermisch isoliert und/oder gegen Nebenluft abgedichtet aufsetzbar ist.

4. Vorrichtung nach Anspruch 3, **dadurch gekennzeichnet, daß** der Wärmetauscher (21) radial außen liegend auf der der Mikrotiterfilterplatte (13) zugewandten Seite (18) eine umlaufende Dichtung (19) aus einem temperaturbeständigem Material aufweist.

5. Vorrichtung nach einem der vorhergehenden Ansprüche, **dadurch gekennzeichnet, dass** der Wärmetauscher (21) mehrere Düsen (22) als Austrittsöffnungen aufweist, wobei jeder Kavität (12) in der Mikrotiterfilterplatte (13) mindestens eine Düse (22) zugeordnet ist, und die Düsen (22) im Raster der Kavitäten (12) angeordnet sind.

6. Vorrichtung nach Anspruch 1, **dadurch gekennzeichnet, dass** jeder Kavität (12) mehrere Düsen (22) zugeordnet sind.

7. Vorrichtung nach einem der vorhergehenden Ansprüche, **dadurch gekennzeichnet, dass** der Strömungswiderstand des Wärmetauschers (21) mehrfach kleiner ist als der Strömungswiderstand der zu trocknenden Filter (11).

8. System zum Trocknen von in Kavitäten (12) einer Mikrotiterfilterplatte (13) angeordneten Filtern (11) mittels eines Gasstromes (23), wobei die Kavitäten (12) jeweils eine obere und eine untere Öffnung (17) aufweisen, wobei das System einen Wärmetauscher (21) nach einem der vorhergehenden Ansprüche 1 bis 7 und eine zur Vakuumfiltration von Mikrotiterfilterplatten (13) ausgebildete Kammer (14) aufweist, auf die die Mikrotiterfilterplatte (13) derart angeordnet werden kann, dass an den unteren Öffnungen (17) der Kavitäten (12), in denen die Filter (11) angeordnet sind, ein Vakuum anlegbar ist, wobei eine mit der Vakuumkammer (15) in Verbindung stehende Vakuumpumpe (16) durch die Filter (11) hindurch den von der Eintritts- zur Austrittsöffnung des Wärmetauschers (21) verlaufenden Gasstrom (23) erzeugt, weiterhin weist das System eine Transporteinrichtung (31, 32) zum Bewegen des Wärmetauschers (21) auf, insbesondere zum Verfahren des Wärmetauschers (21) zwischen einer Trocknungs- und einer Aufheizposition (34), und das System weist eine Temperiereinheit (33) auf, auf die der passiv beheizte Wärmetauscher (21) von der Transporteinrichtung (31, 32) thermisch kontaktierend absetzbar ist.

9. Verfahren zum Trocknen von in Kavitäten (12) einer Mikrotiterfilterplatte (13) angeordneten Filtern (11) mittels eines Gasstromes (23), wobei die Kavitäten (12) jeweils eine obere und eine untere Öffnung (17) aufweisen und die Mikrotiterfilterplatte (13) auf einer zur Vakuumfiltration von Mikrotiterfilterplatten (13) ausgebildeten Kammer (14) derart angeordnet ist, dass an den unteren Öffnungen (17) der Kavitäten (12), in denen die Filter (11) angeordnet sind, ein Vakuum angelegt werden kann, **dadurch gekennzeichnet, dass** auf der Mikrotiterfilterplatte (13) ein Wärmetauscher (21) entfernbar angeordnet wird, der vor dem Anordnen aufgeheizt worden ist, wobei der Wärmetauscher (21) wenigstens eine Eintritts- und wenigstens eine Austrittsöffnung (22) aufweist, zwischen denen ein Gasstrom (23) den Wärmetauscher (21) durchströmen kann, wobei der Wärmetauscher (21) den Gasstrom (23) erwärmt und auf die oberen Öffnungen der Kavitäten (12) leitet, und der von der Eintritts- zur Austrittsöffnung des Wärmetauschers (21) verlaufende Gasstrom (23) mittels einer mit der Vakuumkammer (14) in Verbindung stehenden Vakuumpumpe (16) durch die zu trocknenden Filter (11) hindurch erzeugt wird, wobei der Wärmetauscher (21) automatisiert durch zugeordnete Transportmittel (31, 32) zwischen einer Aufheizposition (34) und der Position auf der Mikrotiterfilterplatte (13) verfahren wird, wobei der Wärmetauscher (21) passiv aufgeheizt wird, indem er in der Aufheizposition (34) in großflächigen Kontakt mit einer Temperiereinheit (33) gebracht wird.

10. Verfahren nach Anspruch 9, **dadurch gekennzeichnet, daß** ein Wärmetauscher (21) mit den Merkmalen gemäß eines der Ansprüche 2 bis 7 eingesetzt wird.

## Claims

1. Apparatus (10) for drying cavities (12) in microtitration filter trays (13) and filters (11) configured therein by using a flow of gas (23), each cavity (12) comprising an upper aperture and a lower aperture (17) and the microtitration filter tray (13) being mounted on a chamber (14) designed to vacuum-filter microtitration filter trays (13) in a manner that a vacuum can be applied to the lower apertures (17) of the cavities (12) receiving the filters (11)
**characterized by**
a heat exchanger (21) which can be detachably mounted on and be subsequently removed from the microtitration filter tray (13) and can be heated and which comprises at least one inlet aperture and one outlet aperture (22), a flow of gas (23) being able to move between said apertures, the heat exchanger (21) being designed to heat the gas flow (23) and to guide it onto the upper apertures of the cavities (12), a vacuum pump (16) communicating with the vacuum chamber (14) through the filters (11) and producing the gas flow (23) moving from the inlet aperture to the outlet aperture (22) of the heat exchanger, the apparatus furthermore comprising a transporter (31, 32) and a thermostatting unit (33) associated to the heat exchanger (21), the heat exchanger (21) being designed to be moved by means of the associated transporter (31, 32) into a heating position (34), whereby the heat exchanger (21) is heated passively in being deposited on, and making thermal contact with, the associated thermostatting unit (33).

2. Apparatus as claimed in claim 1, **characterized in that** the heat exchanger (21) is planar and in particular its length and width correspond to the conventional microtitration filter trays (13).

3. Apparatus as claimed in either of claims 1 and 2, **characterized in that** the heat exchanger (21) can be deposited in thermally insulated manner, and/or hermetically sealing off extraneous air, on the microtitration filter tray (13).

4. Apparatus as claimed in claim 3, **characterized in that** the heat exchanger (21) is fitted on the side (18) facing the microtitration filter tray (13) with a radially outward and circumferential seal (19) made of a heat-resistant material.

5. Apparatus as claimed in one of the above claims, **characterized in that** the heat exchanger (21) is fitted with several nozzles (22) acting as outlet apertures, at least one nozzle (22) being allocated to each cavity (12) in the microtitration filter tray (13), and **in that** the nozzles (22) are configured in the pattern of the cavities (12).

6. Apparatus as claimed in claim 1, **characterized in that** several nozzles (22) are allocated to each cavity (12).

7. Apparatus as claimed in one of the above claims, **characterized in that** the flow impedance of the heat exchanger (21) is a small fraction of that of the filters (11) to be dried.

8. A system for drying filters (11) configured in cavities (12) of a microtitration filter tray (13), using a flow (23) of gas, each cavity comprising an upper aperture and a lower aperture (17), said system comprising a heat exchanger (21) as claimed in one of the above claims 1 through 7 and a chamber (14) designed for vacuum filtration of microtitration filter trays (13), such a tray being mountable in a manner on said chamber (14) that a vacuum can be applied to the lower apertures (17) of the cavities (12) wherein are configured the filters (11), a vacuum pump (16) communicating with the vacuum chamber (15) generating the flow (23) of gas from the inlet aperture to the outlet aperture of the heat exchanger (21) and through the filters (11), the system further comprising a transporter (31, 32) for moving the heat exchanger (21), in particular for moving the heat exchanger (21) between a drying position and a heating position (34), and the system comprising a thermostatting unit (33), where the passively heated heat exchanger (21) can be deposited in thermally contacting manner on said unit (33) by means of the transporter (31, 32).

9. A method for drying filters (11) configured in a microtitration tray (13) by using a flow (23) of gas, said cavities (13) each comprising an upper aperture and a lower aperture (17) and the microtitration filter tray (13) being configured on a chamber (14) designed for vacuum filtration of microtitration filter trays (13) in a manner that a vacuum can be applied to the lower apertures (17) of the cavities (12) receiving the filters (11),
**characterized in that** a heat exchanger (21) is detachably mounted on the microtitration filter tray (13) and is heated before being mounted, said heat exchanger (21) comprising at least one inlet aperture and at least one outlet aperture (22) allowing a gas flow (23) to move between them, said heat exchanger (21) heating the gas flow (23) and guiding it onto the upper apertures of the cavities (12), the gas flow (23), which moves from the inlet aperture to the outlet aperture of said heat exchanger (21), being generated to pass through the filters (11) to be dried by a vacuum pump (16) communicating with the vacuum chamber (14), the method further **characterized in that** the heat exchanger (21) is displaced between a heating position (34) and the position on the microtitration filter tray (13) in automated manner by means of an associated transporter (31, 32), the heat exchanger (21) being heated passively in its heating position (34) in making contact over a large area with the thermostatting unit (33).

10. Method as claimed in claim 9, **characterized in that** it employs a heat exchanger (21) defined by the features of one of claims 2 through 7.

## Revendications

1. Dispositif (10) destiné à sécher au moyen d'un courant de gaz (23) des cavités (12) dans des plaques de microtitration à filtres et des filtres (11) agencés dans celles-ci, les cavités (12) présentant chacune une ouverture (17) supérieure et inférieure et la plaque de microtitration à filtres (13) étant agencée sur une chambre (14) conçue pour la filtration sous vide de plaques de microtitration à filtres (13) de façon telle qu'un vide peut être appliqué aux ouvertures (17) inférieures des cavités (12) dans lesquelles sont agencés les filtres (11), **caractérisé par** un échangeur de chaleur (21) pouvant être positionné sur la plaque de microtitration à filtres (13) et à nouveau retiré et conçu de façon à pouvoir être chauffé et présentant au moins un orifice d'entrée (22) et au moins un orifice de sortie (22) entre lesquels un courant de gaz (23) peut traverser l'échangeur de chaleur (21), l'échangeur de chaleur (21) étant conformé de façon à réchauffer le courant de gaz (23) à le diriger vers les ouvertures supérieures des cavités (12), une pompe à vide (16) qui communique avec la chambre à vide (14) produisant à travers les filtres (11) le courant de gaz (23) s'écoulant de l'orifice d'entrée à l'orifice de sortie (17) de l'échangeur de chaleur (21), le dispositif présentant en outre un mécanisme de transport (31, 32) affecté à l'échangeur de chaleur (21) et une unité d'équilibrage de température (33) correspondante, le mécanisme de transport (31, 32) permettant de déplacer en une position de chauffage (34) l'échangeur de chaleur (21) conçu de façon à pouvoir être transporté, et l'échangeur de chaleur (21) continuant à être chauffé passivement en étant déposé par le mécanisme de transport (31, 32) sur l'unité d'équilibrage de température (33) correspondante de façon à réaliser un contact thermique avec celle-ci.

2. Dispositif selon la revendication 1, **caractérisé en ce que** l'échangeur de chaleur (21) est réalisé sous forme de plaque, notamment de plaque de longueur et de largeur correspondant à celles d'une plaques de microtitration à filtres (13) courante.

3. Dispositif selon la revendication 1 ou 2, **caractérisé en ce que** l'échangeur de chaleur (21) peut être déposé sur la plaque de microtitration à filtres (13) tout en étant thermiquement isolé et/ou étanche aux pénétrations d'air environnant.

4. Dispositif selon la revendication 3, **caractérisé en ce que** l'échangeur de chaleur (21) présente, à l'extérieur dans le sens radial et du côté (18) tourné vers la plaque de microtitration à filtres (13), un joint périphérique (19) réalisé en un matériau résistant à la chaleur.

5. Dispositif selon l'une des revendications précédentes, **caractérisé en ce que** l'échangeur de chaleur (21) présente plusieurs buses (22) en guise d'orifices de sortie, une buse (22) au moins étant affectée à chaque cavité (12) de la plaque de microtitration à filtres (13) et les buses (22) étant agencées selon la grille des cavités (12).

6. Dispositif selon la revendication 1, **caractérisé en ce qu'**à chaque cavité (12) sont affectées plusieurs buses (22).

7. Dispositif selon l'une des revendications précédentes, **caractérisé en ce que** la résistance à l'écoulement opposée par l'échangeur de chaleur (21) est plusieurs fois inférieure à la résistance à l'écoulement opposée par les filtres (11) à sécher.

8. Système de séchage, au moyen d'un courant de gaz (23), de filtres (11) agencés dans les cavités (12) d'une plaque de microtitration à filtres (13), les cavités (12) présentant chacune une ouverture (17) supérieure et inférieure, le système présentant un échangeur de chaleur (21) selon l'une des revendications précédentes 1 à 7 et une chambre (14) conçue pour la filtration sous vide de plaques de microtitration à filtres (13) et sur laquelle la plaque de microtitration à filtres (13) peut être placée de façon telle qu'un vide peut être appliqué aux ouvertures (17) inférieures des cavités (12) dans lesquelles sont agencés les filtres (11), une pompe à vide (16) qui communique avec la chambre à vide (15) produisant à travers les filtres (11) le courant de gaz (23) s'écoulant de l'orifice d'entrée à l'orifice de sortie de l'échangeur de chaleur (21), le système présentant en outre un mécanisme de transport (31, 32) destiné à déplacer l'échangeur de chaleur (21), notamment à le déplacer entre une position de séchage et de chauffage (34), le système présentant également une unité d'équilibrage de température (33) sur laquelle l'échangeur de chaleur (21) chauffé passivement peut être déposé par le mécanisme de transport (31, 32) de façon à réaliser un contact thermique.

9. Procédé de séchage, au moyen d'un courant de gaz (23), de filtres (11) agencés dans les cavités (12) d'une plaque de microtitration à filtres (13), les cavités (12) présentant chacune une ouverture (17) supérieure et inférieure et la plaque de microtitration à filtres (13) étant agencée sur une chambre (14) conçue pour la filtration sous vide de plaques de microtitration à filtres (13) de façon telle qu'un vide puisse être appliqué aux ouvertures (17) inférieures des cavités (12) dans lesquelles sont agencés les filtres (11), **caractérisé en ce qu'**un échangeur de chaleur (21) préalablement chauffé est placé de façon amovible sur la plaque de microtitration à filtres (13), l'échangeur de chaleur (21) présentant au moins un orifice d'entrée (22) et au moins un orifice de sortie (22) entre lesquels un courant de gaz (23) peut traverser l'échangeur de chaleur (21), l'échangeur de chaleur (21) réchauffant le courant de gaz (23) et le dirigeant vers les ouvertures supérieures des cavités (12), le courant de gaz (23) s'écoulant de l'orifice d'entrée à l'orifice de sortie de l'échangeur de chaleur (21) étant produit par une pompe à vide (16) qui communique avec la chambre à vide (14) et traversant les filtres (11) à sécher, l'échangeur de chaleur (21) étant, par le moyen de transport (31, 32) correspondant, automatiquement déplacé entre une position de chauffage (34) et sa position sur la plaque de microtitration à filtres (13), l'échangeur de chaleur (21) étant chauffé passivement en position de chauffage (34) en contactant sur une grande surface une unité d'équilibrage de température (33).

10. Procédé selon la revendication 9, **caractérisé en ce qu'**il met en oeuvre un échangeur de chaleur (21) présentant les caractéristiques conformes à l'une des revendications 2 à 7.
